# EUROPÄISCHE PATENTANMELDUNG

(11) **EP 4 455 544 A1**
(43) Veröffentlichungstag der Anmeldung: **30.10.2024**
(21) Anmeldenummer: 24172626.4
(22) Anmeldetag: 26.04.2024
(51) Int. Cl.: F17D 5/06, H02G 1/08, G02B 6/52, G01M 7/00, G01M 3/38, G01M 3/24

(54) **SENSORBOX ZUM KABELEINBLASEN**

(30) Priorität: 26.04.2023 DE 102023203867
(71) Anmelder: Business Mates GmbH, 83342 Tacherting (DE)
(72) Erfinder: Schlögl, Christian W., 83342 Tacherting (DE); Weyer, Thomas, 86399 Bobingen (DE)
(74) Vertreter: Wimmer, Hubert

(57) **Zusammenfassung**

Sensorbox, Einblas-Sensor-System und Verfahren jeweils zum Detektieren von Vibrationsdaten an einem Rohr in dem Kabel einblasbar sind. Die Sensorbox weist einen Sensor, eine Sendeeinheit und einen Prozessor auf. Der Sensor ist mit einem Rohr gekoppelt ist, wobei in dem Rohr Kabel einblasbar sind. Der Sensor ist konfiguriert, Vibrationsdaten am Rohr zu detektieren, wobei die detektierten Vibrationsdaten über die Zeit ein Vibrationsprofil darstellen. Die Sendeeinheit überträgt die detektierten Vibrationsdaten oder Ereignisdaten, die eines oder mehrere Ereignisse im Vibrationsprofil kennzeichnen. Dazu ist der Prozessor gekoppelt mit der Sendeeinheit und identifiziert basierend auf dem Vibrationsprofil das eine oder die mehreren Ereignisse.

## Beschreibung

### Gebiet der Erfindung

Die vorliegende Erfindung bezieht sich auf Sensortechnik im Bereich Einblasen von Kabeln in Rohre.

### Hintergrund der Erfindung (und Stand der Technik)

Bei der Verlegung von Kabeln, insbesondere Glasfaserkabeln oder Mikrokabeln, werden diese in Leerrohre, beispielsweise Speednet-Rohre, eingeblasen welche in der Strecke von einem Verteilerkasten zu einem Hausanschluss verlegt sind. Dazu sind in der Regel zwei Personen an den jeweiligen Enden des Leerrohres bzw. des Rohres notwendig. Eine erste Person bläst zunächst nur Luft durch das Rohr und eine zweite Person prüft an dem zweiten Ende des Rohres die ordnungsgemäße Funktion. Anschließend wird, von der ersten Person, ein Schwamm zum Test der Durchlässigkeit durch das Rohr geblasen und die zweite Person prüft, ob der Schwamm das Rohr durchquert hat. Zuletzt wird, von der ersten Person, das zu verlegende Kabel mit einer Metallspitze bzw. einer Endkappe versehen und durch das Rohr geblasen. Die zweite Person registriert das Ankommen des Kabels mit der Metallspitze um den Einblasvorgang zu beenden.

Solch ein Einblasvorgang ist aufwendig, da er zum einen zwei Personen benötigt und zum anderen Zugang der zweiten Person zum zweiten Ende des Rohres voraussetzt. Dieser Zugang muss in der Regel im Haus, das angeschlossen werden soll, geschaffen werden. Damit ist eine Abstimmung mit dem Hauseigentümer notwendig, um den Zugang während des Einblasvorgangs zu gewährleisten.

Ein bekanntes System arbeitet mit einem Set aus einem Sender und einem Empfänger. Dabei wird am zweiten Ende des Rohres ankommende Luft und ein ankommendes Mikrokabel mit Endkappe erkannt und dem Empfänger signalisiert. Damit ist es möglich den Einblasvorgang mit einer Person durchzuführen, wobei diese Person zunächst den Sender am zweiten Ende des Rohres anbringen muss. Anschließend kann die Person am ersten Ende des Rohres sowohl das Ankommen der Luft am zweiten Ende als auch das ankommende Kabel registrieren und somit den Einblasvorgang starten bzw. beenden. Anschließend entfernt die Person den Sender wieder und kann diesen für einen neuen Einsatz aufladen.

Allerdings ist bei diesem Set der Durchgangstest mit dem Schwamm nicht vorgesehen, wodurch sich die Fehleranfälligkeit beim Einblasen des Kabels erhöht. Ferner ist weiterhin der Zugang zum Haus (am zweiten Ende des Kabels) während des Einblasvorgangs zu gewährleisten. Damit ist eine terminliche Abstimmung mit dem Hauseigentümer notwendig, die die terminliche Flexibilität des Einblasvorgangs einschränkt und zu Mehrkosten führen kann.

### Aufgabe der Erfindung

Die Aufgabe der vorliegenden Erfindung ist, die oben beschriebenen Nachteile zu überwinden, und insbesondere ein Einblasen mit einer Person zu ermöglichen, so dass alle typischen Schritte (Luft, Schwamm, Kabel) erkannt werden und kein Zugang zum Haus (bzw. zweiten Ende des Rohres) während des Einblasvorgangs notwendig ist.

### Zusammenfassung der Erfindung

Die oben genannte Aufgabe und weitere Probleme werden gelöst durch eine Sensorbox, die einen Sensor, der mit einem Rohr gekoppelt ist, aufweist. In dem Rohr sind Kabel einblasbar, wobei der Sensor konfiguriert ist, Vibrationsdaten am Rohr zu detektieren, wobei die detektierten Vibrationsdaten über die Zeit ein Vibrationsprofil darstellen. Die Sensorbox weist ferner eine Sendeeinheit auf, die die detektierten Vibrationsdaten überträgt und/oder Ereignisdaten überträgt, die eines oder mehrere Ereignisse im Vibrationsprofil kennzeichnen, wobei die Sensorbox dazu einen Prozessor gekoppelt mit der Sendeeinheit aufweist, der basierend auf dem Vibrationsprofil das eine oder die mehreren Ereignisse identifiziert.

Der Sensor ist beispielsweise ein Piezo-Sensor, ein akustischer Sensor oder ein Photo-Sensor ist. Dies ermöglicht eine kostengünstige Detektion von Vibrationen am Rohr.

Die Sendeeinheit kann die detektierten Vibrationsdaten oder die Ereignisdaten mittels einer Funktechnologie übertragen, vorzugsweise einer Mobilfunktechnologie oder LoRaWAN-Technologie. Dies ermöglicht eine unzugängliche Lokalisierung der Sensorbox, beispielsweise im Inneren eines Hauses mit geringem Stromverbrauch und hoher Lebensdauer.

Die Sendeeinheit und der Prozessor können ansprechend auf ein Aktivierungssignal aus einem Energiesparmodus aufgeweckt werden. Dies reduziert den Stromverbrauch weiter.

Der Sensorbox kann eine einzigartige vorbestimmte Kennung zugeordnet werden, wobei die Sendeeinheit zum Senden der Kennung an eine externe Empfangseinheit konfiguriert ist.

Die oben genannte Aufgabe und weitere Probleme werden ferner durch ein Einblas-Sensor-System gelöst, das wenigstens eine wie oben beschriebene Sensorbox aufweist. Das Einblas-Sensor-System weist ferner eine Empfangseinheit auf, die die detektierten Vibrationsdaten empfängt falls die Sendeinheit der Sensorbox Vibrationsdaten überträgt und/oder die Ereignisdaten empfängt, die ein oder mehrere Ereignisse kennzeichnen, falls die Sendeinheit der Sensorbox die Ereignisdaten überträgt. Das Einblas-Sensor-System weist ferner einen Systemprozessor auf, der in dem Vibrationsprofil eines oder mehrere Ereignisse identifiziert und Ereignisdaten generiert, falls die Empfangseinheit die detektierten Vibrationsdaten empfängt.

Das Einblas-Sensor-System kann eine Vielzahl von Sensorboxen aufweisen.

Die Empfangseinheit kann die detektierten Vibrationsdaten oder die Ereignisdaten von der Vielzahl von Einblas-Sensorboxen empfangen und die detektierten Vibrationsdaten oder die Ereignisdaten für jede der Vielzahl von Einblas-Sensorboxen mit einer jeweiligen einzigartigen Kennung in ein digitales Netzwerk übertragen, wobei das Netzwerk die Vibrationsdaten oder die Ereignisdaten mit der jeweiligen Kennung geographischen Adressen zuordnet.

Das eine oder die mehreren Ereignisse umfassen Ankommen von Luft am Ende des Rohres bzw. Luftdruckveränderung im Rohr, einem Schwamm oder einem Kabel im Rohr im Messbereich des Sensors.

Die oben genannte Aufgabe und weitere Probleme werden ferner gelöst durch ein Verfahren zum Detektieren von Vibrationsdaten an einem Rohr in dem Kabel einblasbar sind. Das Verfahren weist Detektieren, mit einem Sensor, der mit dem Rohr gekoppelt ist, von Vibrationsdaten auf, wobei die detektierten Vibrationsdaten über die Zeit ein Vibrationsprofil darstellen. Das Verfahren weist ferner Übertragen, mit einer Sendeeinheit, der detektierten Vibrationsdaten und/oder von Ereignisdaten auf, die eines oder mehrere Ereignisse im Vibrationsprofil kennzeichnen, wobei dazu ein Prozessor gekoppelt mit der Sendeeinheit basierend auf dem Vibrationsprofil das eine oder die mehreren Ereignisse identifiziert.

### Kurze Beschreibung der Zeichnungen

Die Erfindung sowie weitere Einzelheiten und Vorteile derselben werden nachfolgend an bevorzugten Ausführungsbeispielen unter Bezugnahme auf die Figuren erläutert. Es zeigen:
- Fig. 1: eine schematische Ansicht einer Sensorbox nach einem Ausführungsbeispiel;
- Fig. 2: eine schematische Ansicht einer Sensorbox nach einem weiteren Ausführungsbeispiel;
- Fig. 3: eine schematische Ansicht eines Einblas-Sensor-Systems nach einem weiteren Ausführungsbeispiel;
- Fig. 4: eine schematische Ansicht eines Einblas-Sensor-Systems nach einem weiteren Ausführungsbeispiel;
- Fig. 5: eine schematische Ansicht eines Verfahrens zum Detektieren von Vibrationsdaten nach einem weiteren Ausführungsbeispiel;
- Fig. 6A: eine beispielhafte Ansicht eines Frequenzprofils bzw. Vibrationsprofils, das Durchblasen eines Speednet-Rohres mit Luft gemäß eines Ausführungsbeispiels darstellt.
- Fig. 6B: eine beispielhafte Ansicht eines Frequenzprofils bzw. Vibrationsprofils, das Durchblasen eines Speednet-Rohres mit einem Schwamm gemäß eines Ausführungsbeispiels darstellt.
- Fig. 6C: eine beispielhafte Ansicht eines Frequenzprofils bzw. Vibrationsprofils, das Durchblasen eines Speednet-Rohres mit einem Mikrokabel gemäß eines Ausführungsbeispiels darstellt.

### Detaillierte Beschreibung der Erfindung

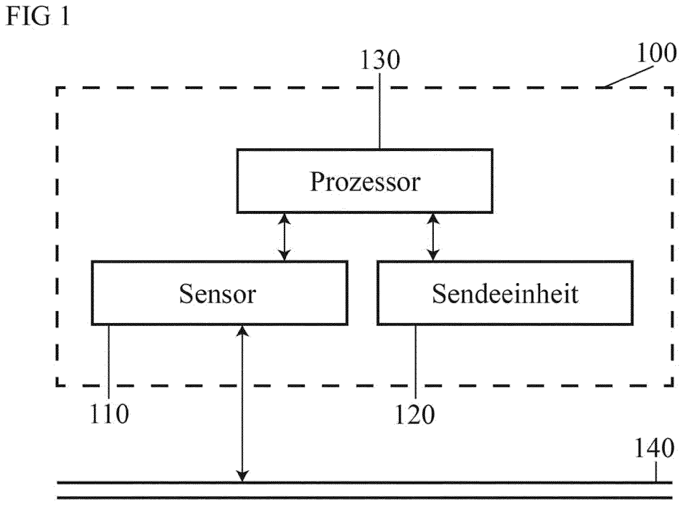

**Fig. 1** zeigt eine schematische Ansicht einer Sensorbox 100 nach einem Ausführungsbeispiel. Die Sensorbox 100 weist einen Sensor 110, eine Sendeeinheit 120 und einen Prozessor 130 auf. Der Sensor 110, die Sendeeinheit 120 und der Prozessor 130 sind kommunikativ miteinander gekoppelt. Der Sensor 110 ist mit einem Leerrohr 140 (im Folgenden auch Rohr) gekoppelt um Vibrationsdaten am Rohr 140 zu detektieren.

Das Leerrohr 140 ist zum Verlegen von Kabeln, beispielsweise Glasfaserkabeln oder Mikrokabeln, geeignet, d.h., derartige Kabel können mittels Einblasen im Rohr 140 verlegt werden.

Der Sensor 110 ist geeignet um Vibrationsdaten am Rohr 140 zu detektieren. Vibrationen am Rohr 140 entstehen insbesondere durch das Verlegen von Kabeln mittels Einblasen im Rohr 140. Die Kopplung zwischen dem Sensor 110 und dem Rohr 140 erfolgt vorzugsweise am Endbereich, kann aber grundsätzlich an jedem Ort des Rohres 140 erfolgen.

Beim Einblasen eines Kabels wird gewöhnlich zunächst nur Luft durch das Rohr geblasen um die Durchlässigkeit des Rohres zu prüfen. Anschließend wird ein Schwamm zum weiteren Test der Durchlässigkeit und zur Reinigung durch das Rohr geblasen. Falls der Schwamm das Rohr erfolgreich durchquert hat, wird zuletzt das zu verlegende Kabel durch das Rohr geblasen.

Jeder dieser drei Vorgänge (Einblasen von Luft, Schwamm oder Kabel) erzeugt Vibrationen am Rohr 140, wobei ein Vibrationsprofil über die Zeit charakteristisch für jeden dieser Vorgänge ist.

Ein geeigneter Sensor 110 zur Detektion der Vibrationen am Rohr 140 ist ein Piezo-Sensor. Allerdings können auch weitere Sensoren eingesetzt werden, um die Vibrationen am Rohr 140 zu messen. Beispielsweise kann ein akustischer Sensor, ein Kontaktmikrofon, oder ein Photo-Sensor verwendet werden.

Auch andere Sensoren als Vibrationssensoren sind möglich um verschiedene Vorgänge zu messen. So eignet sich ein Drucksensor, um Luftdruck zu messen und ein Metallsensor (z.B. mittels Induktion) um eine Endkappe, also eine Metallspitze am Ende des einzublasenden Kabels, zu detektieren. Die Verwendung eines Vibrationssensors gemäß der Erfindung ermöglicht vorteilhaft, mit einem einzigen Sensor alle drei Vorgänge (Einblasen von Luft, Schwamm oder Kabel) bei der Verlegung eines Kabels mittels Einblasen zu detektieren. Insbesondere das Detektieren des einzublasenden Kabels ist nicht auf eine Metallspitze am Ende des Kabels angewiesen. Dadurch kann die Endkappe durch kostengünstigere Alternativen, beispielsweise aus Kunststoff, ersetzt werden.

Ein weiterer Vorteil der erfindungsgemäßen Verwendung eines Vibrationssensors besteht darin, dass kein Eingriff in das Verlege-System zum Einblasen, insbesondere in das Innere des Rohrs 140, erfolgt, sondern der Sensor 110 zusätzlich angebracht werden kann. Dadurch können bestehende Systeme einfach erweitert werden. Da ein bestehendes System durch eine solche Erweiterung nicht verändert wird, kann diese ohne eine neue Zertifizierung erfolgen. Ferner ist eine erfindungsgemäße Verwendung eines Vibrationssensors unempfindlich gegen hohen Druck oder Druckspitzen in dem Rohr 140 und ferner unempfindlich gegen Wasser, das sich in den Rohren befinden kann.

Ferner benötigt die erfindungsgemäße Verwendung eines Vibrationssensors, insbesondere eines Piezo-Sensors, sehr wenig Energie, so dass die Sensorbox im Vergleich zum Stand der Technik länger einsatzbereit ist.

Die Sendeeinheit 120 überträgt die detektierten Vibrationsdaten an eine externe Empfangseinheit, die sich beispielsweise außerhalb der Sensorbox 100 und/oder außerhalb des Hauses, in dem sich der Hausanschluss befindet, befinden kann. Die Sendeeinheit 120 kann die detektierten Vibrationsdaten als Rohdaten, also unverarbeitet, übertragen, beispielsweise gemessene Vibrationsfrequenz (in Hz) mit entsprechender Stärke der Vibration (in dB) über die Zeit.

Der Prozessor 130 kann optional die gemessenen Rohdaten des Sensors 110 verarbeiten und Ereignisse in den Rohdaten identifizieren. Ein solches Ereignis kann unter anderem Ankommen von Luft am Ende des Rohres bzw. eine Luftdruckveränderung im Rohr, Ankommen von einem Schwamm oder einem Kabel im Rohr im Messbereich des Sensors sein. Jedes dieser Ereignisse weist ein charakteristisches Profil (bzw. ein Vibrationsprofil) in den gemessenen Rohdaten auf, über das das jeweilige Ereignis identifiziert werden kann.

Falls der Prozessor 130 Ereignisse in den Rohdaten identifiziert hat, kann die Sendeeinheit 120 Ereignisdaten übertragen, welche angeben welches Ereignis (zu welchem Zeitpunkt) vom Prozessor identifiziert wurde.

Die Sendeeinheit 120 kann die detektierten Vibrationsdaten oder die Ereignisdaten mittels einer Funktechnologie, vorzugsweise einer Mobilfunktechnologie, übertragen. Alternativ kann die Sendeeinheit 120 basierend auf Long Range Wide Area Network (LoRaWAN) -Technologie kommunizieren und die entsprechenden Daten übertragen. Dies verringert den Energieverbrauch.

Die Sensorbox 100 kann grundsätzlich mit einer externen Stromquelle betrieben werden, beispielsweise einem Netzanschluss am Einsatzort. Allerdings muss in diesem Fall eine solche Stromquelle bereitgestellt werden. Durch die Verwendung eines entsprechenden Sensors, z.B. Piezo-Sensor, und einer entsprechenden Funktechnologie, beispielsweise LoRaWAN, erreicht die Sensorbox eine autonome Laufzeit, also nur mit einer Batterie/ einem Akkumulator, von mindestens drei Monaten.

Um den Energieverbrauch der Sensorbox 100 zu minimieren und, damit die Laufzeit zu erhöhen, können sich Elemente (z.B. Sensor 110, Sendeeinheit 120, und/oder Prozessor 130) der Sensorbox 100 in einem Energiesparmodus befinden. Ein stromsparender Chip als Prozessor 130 oder ein zusätzlicher Chip zum Prozessor 130 kann die jeweiligen Elemente der Sensorbox 100, insbesondere die Sendeeinheit 120 und der Prozessor 130, ansprechend auf ein Aktivierungssignal bei Bedarf aktivieren. Das Aktivierungssignal kann beispielsweise vom Sensor 100 erzeugt werden, falls die detektierte Vibration einen Schwellenwert überschreitet und damit wahrscheinlich ein Ereignis bevorsteht. Alternativ kann das Aktivierungssignal von einer externen Einheit gesendet und in der Sensorbox 100 mit einem derart geeigneten Empfänger (z.B. vorgesehen in dem zusätzlichen Chip) empfangen werden.

Ferner können die Daten (Vibrationsdaten oder Ereignisdaten) gesammelt für ein bestimmtes Zeitfenster gesendet werden. Wenn keine Daten zur Übertragung bereitstehen, insbesondere wenn keine Ereignisse eingetreten sind, kann periodisch ein Status der Sensorbox, beispielsweise ein Bereitschaftssignal und ein Batteriestand, übertragen werden.

Der Sensorbox 100 ist ferner eine einzigartige vorbestimmte Kennung zugeordnet, die einzigartig und vorbestimmt in einem System ist, in dem sich die Sensorbox 100 verwendet wird. Die Sendeeinheit 120 der Sensorbox 100 sendet diese Kennung an eine externe Empfangseinheit. Als Kennung kann beispielsweise die MAC-Adresse eines Controllers in der Sensorbox verwendet werden. Diese ist eindeutig, aber nicht einfach zu lesen/schreiben. Weiter kann eine Identifizierung (ID) in die Sensorbox 100 einprogrammiert sein. Diese kann ferner auf die Sensorbox 100 aufgedruckt sein um Verwechslungen für den Endnutzer (bei der Kabelinstallation) zu vermeiden. Vorzugsweise wird die Kennung bei der Herstellung der Sensorbox 100 einmalig und fest vergeben um die Inbetriebnahme und Installation im System zu erleichtern. Ferner kann bei Verwendung von LoRaWAN Technologie eine LoRaWAN-ID der Sendeinheit 110 verwendet werden.

Die einzigartige vorbestimmte Kennung ermöglicht bei jeder Übertragung der Sendeeinheit 110 eine eindeutige Zuordnung der gesendeten Daten zu der spezifischen Sensorbox 100.

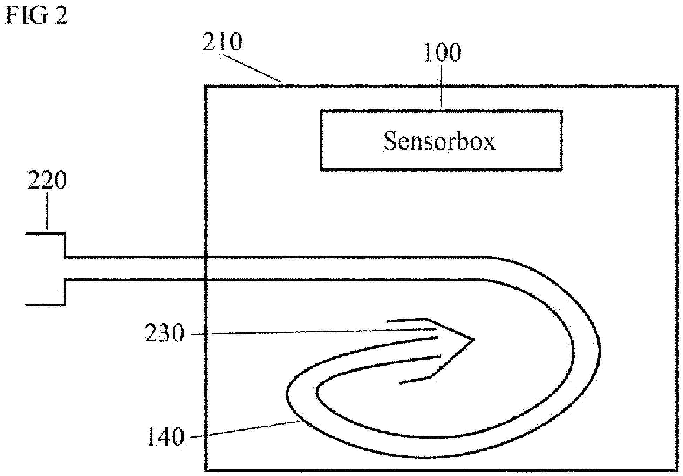

**Fig. 2** zeigt eine schematische Ansicht einer Sensorbox nach einem weiteren Ausführungsbeispiel. Eine Sensorbox, beispielsweise die Sensorbox aus Fig. 1, ist in einem Gehäuse 210 angeordnet. In das Gehäuse 210 wird ein Leerrohr 140 eingeführt. Am Ende des Leerrohres 140 außerhalb des Gehäuses 210 befindet sich eine Kupplung 220. Am anderen Ende des Leerrohres 140 innerhalb des Gehäuses 210 ist ein Auffangbehälter 230 angebracht.

Das gezeigte Leerrohr 140 ist mit mindestens einer Wicklung im Gehäuse 210 aufgerollt. Prinzipiell ist jede verschiedene Länge des Leerrohres 140 im Gehäuse 210 möglich, mit oder ohne Wicklung. Je mehr Leerrohr im Gehäuse zur Verfügung steht, desto weiter kann das Rohr bei einer späteren Installation, beispielsweise in einem Gebäude, verlegt werden.

Die Kupplung 220 ermöglicht die Verbindung des Leerrohres 140 mit einem weiteren Leerrohr, in das Kabel eingeblasen werden können.

Der Auffangbehälter 230 dient dazu beispielweise einen Schwamm, der durch das Leerrohr 140 geblasen wird, aufzufangen.

Die Sensorbox 100 ist mit dem Leerrohr 140 gekoppelt um Vibrationsdaten am Rohr 140, wie bei Fig. 1 beschrieben, zu detektieren.

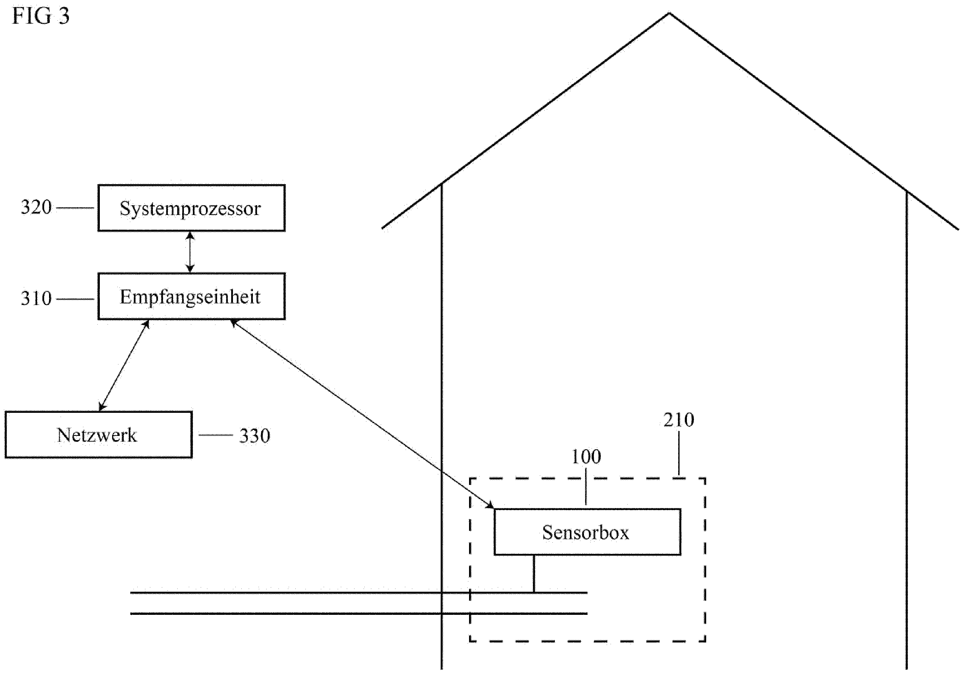

**Fig. 3** zeigt eine schematische Ansicht eines Einblas-Sensor-Systems nach einem weiteren Ausführungsbeispiel. Ein Gehäuse 210, beispielsweise das Gehäuse 210 aus Fig. 2 mit Sensorbox 100, ist im Inneren eines Hauses angeordnet. Dabei ist die Sensorbox 100 ist mit einem Leerrohr gekoppelt um, wie bei Fig. 1 beschrieben, Vibrationsdaten am Rohr zu detektieren..

Die Sensorbox 100 kommuniziert mit einer externen Empfangseinheit 310 und überträgt, wie bei Fig. 1 beschrieben, detektierte Vibrationsdaten. Ein Systemprozessor 320 und ein digitales Netzwerk 330 sind kommunikativ mit der Empfangseinheit 310 gekoppelt.

Die Empfangseinheit 310 empfängt die detektierten Vibrationsdaten falls die Sendeinheit der Sensorbox 100 Vibrationsdaten überträgt. Falls die Sendeinheit der Sensorbox 100 Ereignisdaten überträgt, empfängt die Empfangseinheit 310 Ereignisdaten, die, wie bei Fig. 1 beschrieben, ein oder mehrere Ereignisse kennzeichnen.. Die Empfangseinheit 310 befindet sich außerhalb des Hauses und wird beispielsweise mit einer permanenten Energieversorgung oder mit einer Batterie betrieben.

Der Systemprozessor 320 identifiziert ähnlich zu dem Prozessor 130 in Fig. 1 eines oder mehrere Ereignisse, falls die Empfangseinheit die detektierten Vibrationsdaten als Rohdaten empfängt und generiert daraus Ereignisdaten. Der Systemprozessor 320 kann auch Teil der Empfangseinheit 310 oder des Netzwerks 330 sein.

Das digitale Netzwerk 330 erhält von der Empfangseinheit 310 (oder generiert selbst) Ereignisdaten, welche angeben welches Ereignis zu welchem Zeitpunkt identifiziert wurde. Wie bei Fig. 1 beschrieben, kann ein solches Ereignis unter anderem Ankommen von Luft am Ende des Rohres bzw. eine Luftdruckveränderung im Rohr, Ankommen von einem Schwamm oder einem Kabel im Rohr im Messbereich des Sensors sein.

Insbesondere, wenn die Empfangseinheit 310 Ereignisdaten und die detektierten Vibrationsdaten als Rohdaten empfängt, kann auf der Seite der Empfangseinheit 310 oder im Netzwerk 330 eine weitere Plausibilitätsprüfung stattfinden.

Von der Empfangseinheit 310 kann ferner ein Aktivierungssignal an die Empfangseinheit der Sensorbox 100 gesendet werden, um Elemente der Sensorbox 100 aus einem Energiesparmodus aufzuwecken (wie bei Fig. 1 beschrieben).

Die Empfangseinheit 310 empfängt ferner die jeweilige einzigartige Kennung der Sensorbox 100 von der die detektierten Vibrationsdaten oder die Ereignisdaten gesendet wurden. Die Empfangseinheit 310 überträgt die jeweiligen Daten (Vibrationsdaten/ Ereignisdaten) zusammen mit der jeweiligen einzigartigen Kennung der entsprechenden Sensorbox 100 in das digitale Netzwerk 330. Das Netzwerk 330 ordnet die empfangenen Daten mit der jeweiligen Kennung einer geographischen Adresse zu.

Die Verknüpfung der einzigartigen Kennung mit der entsprechenden geographischen Adresse basiert auf den Angaben des Installateurs, welcher die Sensorbox 100 an einem Einsatzort anbringt. Beispielsweise wird die Sensorbox 100 an die (innere) Hauswand einer bestimmten Adresse montiert, wenn das entsprechende Leerrohr zu dem Haus verlegt wird. Bei einer späteren Verlegung von Kabeln in dem Leerrohr (mittels Einblasen der Kabel) erhält das Netzwerk somit die Information, an welcher Adresse ein entsprechendes Ereignis (Ankommen von Luft, Schwamm oder Kabel) detektiert wurde. Dadurch entfällt insbesondere die Notwendigkeit einen Zugang zum Einsatzort der Sensorbox 100 während der Verlegung der Kabel zu gewährleisten. Da keine Absprache für solch einen Zugang erforderlich ist, kann die Verlegung der Kabel effizient mit einer Person in kürzester Zeit erfolgen. Das Senden der Daten ins Netzwerk zusammen mit der Kennung reduziert ferner die Fehleranfälligkeit des Systems. Weiterhin kann bei einem Auftreten eines Fehlers beim Einblasen die geografische Adresse einfacher festgestellt werden und verbessert die Fehlerbehebungsprozedur.

Bereits der Installateur des Leerrohres kann, nach Angabe der Kennung für die jeweilige Adresse, leicht die Funktionalität des Rohres prüfen. Ein einfacher Luftdruckgenerator/ Kompressor genügt, um zumindest die erste Funktionalität des Rohres zu überprüfen. Damit kann kostengünstig die korrekte Verlegung des Leerrohres im Netzwerk hinterlegt werden und eventuelle Regressansprüche durch spätere Beschädigungen vermieden werden. Der Installateur der Kabel in dem Leerrohr kann zu einem beliebigen späteren Zeitpunkt tätig werden, wodurch Kosten für Terminabstimmungen vermieden werden können. Ferner wird die Arbeitszeit des Installateurs der Kabel in dem Leerrohr minimiert, da er den Einsatzort der Sensorboxen (meist in Gebäuden) nicht betreten muss sondern ausschließlich von der Einblasstelle der Kabel arbeiten kann.

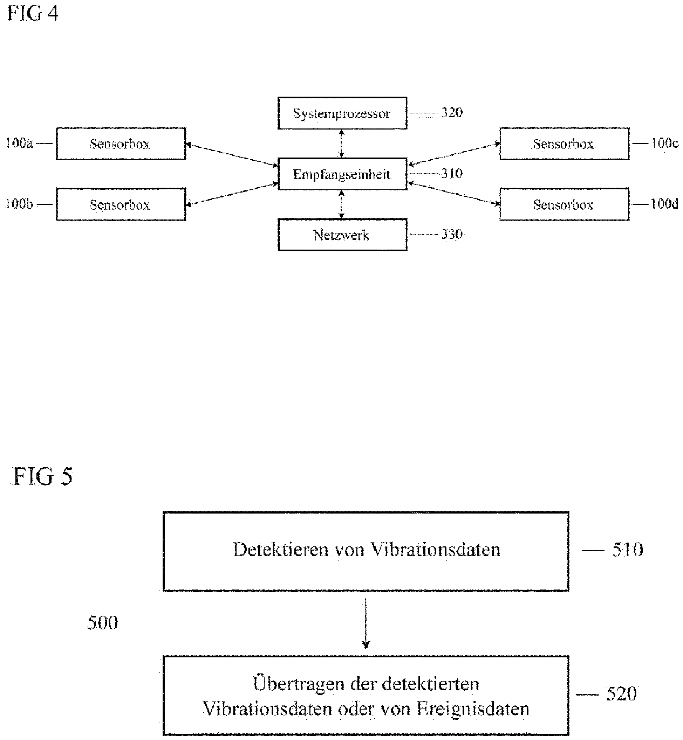

**Fig. 4** ist eine schematische Ansicht eines Einblas-Sensor-Systems nach einem weiteren Ausführungsbeispiel. Eine Empfangseinheit ist, wie in Fig.3 kommunikativ mit einem Systemprozessor 320 und einem Netzwerk 330 gekoppelt. Ferner ist die Empfangseinheit mit einer Vielzahl von Sensorboxen 100a, 100b, 100c, 100d kommunikativ gekoppelt. Jede der Vielzahl von Sensorboxen ist eine erfindungsgemäße Sensorbox, beispielsweise die Sensorbox 100 aus Fig. 1.

Die Empfangseinheit 310 empfängt, wie in Fig. 3, von jeder der Vielzahl von Sensorboxen 100a, 100b, 100c, 100d jeweilige Daten (Vibrationsdaten/ Ereignisdaten) zusammen mit der jeweiligen einzigartigen Kennung der entsprechenden Sensorbox und überträgt diese in das digitale Netzwerk 330. Das Netzwerk 330 ordnet die empfangenen Daten mit der jeweiligen Kennung einer jeweiligen geographischen Adresse zu.

Die Verwendung der einzigartigen Kennung ermöglicht, mehrere Sensorboxen kosteneffizient mit einer einzigen Empfangseinheit zu betreiben. Die Verknüpfung der einzigartigen Kennungen mit den entsprechenden geographischen Adressen ermöglicht ein effizientes und fehlerunempfindliches Verlegen von Leerrohren und Kabeln in den Leerrohren zu unterschiedlichen Zeiten.

**Fig. 5** ist eine schematische Ansicht eines Verfahrens 500 zum Detektieren von Vibrationsdaten nach einem weiteren Ausführungsbeispiel.

In einem ersten Schritt 510 werden Vibrationsdaten detektiert. Das Detektieren erfolgt mit einem Sensor, der mit einem Rohr, in dem Kabel einblasbar sind, gekoppelt ist, wobei die detektierten Vibrationsdaten über die Zeit ein Vibrationsprofil darstellen.

In einem zweiten Schritt 520 werden die detektierten Vibrationsdaten oder Ereignisdaten übertragen. Das Übertragen erfolgt mit einer Sendeeinheit. Ereignisdaten kennzeichnen eines oder mehrere Ereignisse im Vibrationsprofil. Zum Übertragen von Ereignisdaten identifiziert ein Prozessor, der mit der Sendeeinheit gekoppelt ist, basierend auf dem Vibrationsprofil das eine oder die mehreren Ereignisse.

Sämtliche Funktionen der beschriebenen Sensorbox oder des beschriebenen Einblas-Sensor-Systems können als Teil des erfindungsgemäßen Verfahrens 500 ausgeführt werden.

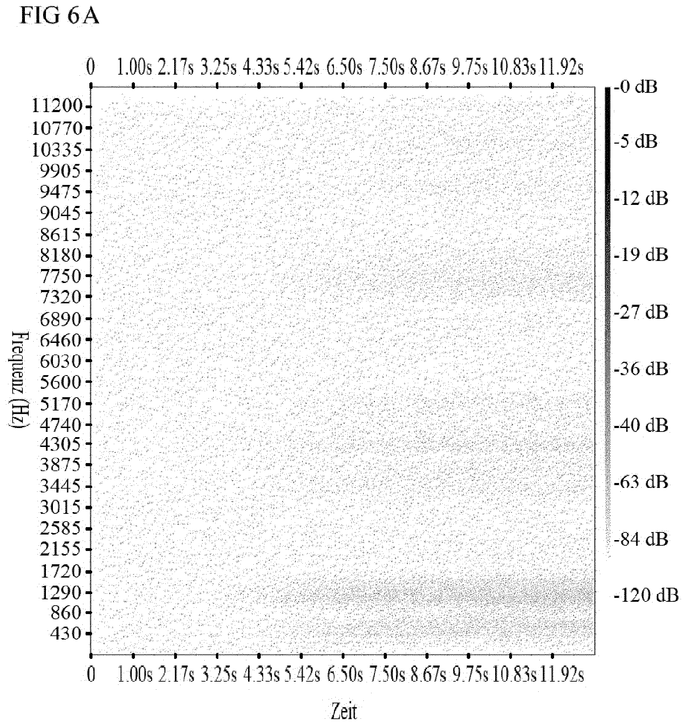

**Fig. 6A** ist eine beispielhafte Ansicht eines Frequenzprofils bzw. Vibrationsprofils, das das Durchblasen eines Speednet-Rohres mit Luft gemäß eines Ausführungsbeispiels darstellt.

Die Figur zeigt Vibrations-Messpunkte zu verschiedenen Frequenzen in Hz (0 bis ca. 12 kHz) über die Zeit in Sekunden (0 bis ca. 12 s). Die Häufung von Messpunkten gibt die Stärke der Vibration in dB (-120 bis 0 dB) an.

Über die gesamte Darstellung ist ein Grundrauschen von bis zu etwa -90 dB zu erkennen ist. Die Messpunkte häufen sich mit einer Stärke von ca. -40 dB bei etwa den Frequenzen 400 Hz und 1300 Hz im Zeitbereich von 5,4 s bis zum Ende der Messung bei 12 s.

Das gezeigte Vibrationsprofil ist beispielhaft für das Ereignis "Durchblasen eines Speednet-Rohres mit Luft". Anhand solch eines Profils kann dieses Ereignis, wie in den Fig. 1-5 beschrieben, identifiziert werden.

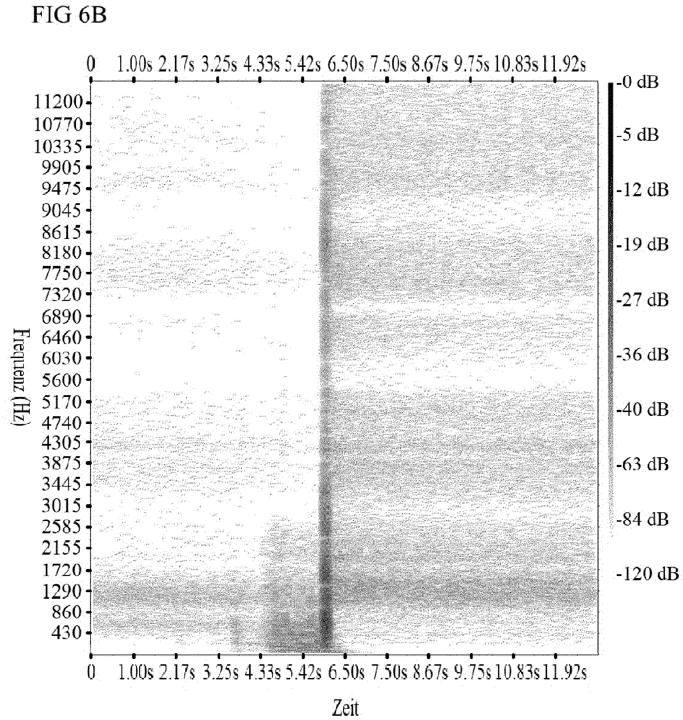

**Fig. 6B** ist eine beispielhafte Ansicht eines Frequenzprofils bzw. Vibrationsprofils, das das Durchblasen eines Speednet-Rohres mit einem Schwamm gemäß eines Ausführungsbeispiels darstellt.

Die Figur zeigt Vibrations-Messpunkte zu verschiedenen Frequenzen in Hz (0 bis ca. 12 kHz) über die Zeit in Sekunden (0 bis ca. 12 s). Die Häufung von Messpunkten gibt die Stärke der Vibration in dB (-120 bis 0 dB) an.

Über die gesamte Darstellung ist ein Grundrauschen von bis zu etwa -90 dB zu erkennen ist. Die Messpunkte häufen sich mit einer Stärke von ca. -40 dB bei etwa den Frequenzen 400 Hz und 1300 Hz im Zeitbereich von 0 s bis etwa 1,37 s. Dies zeigt, ähnlich zu FIG 6A, die Luft, die vor dem Schwamm hergeschoben wird. Zwischen 1 s und 1,37 s tritt eine Häufung von Messpunkten mit einer Stärke von ca. -40 dB über die Frequenzen von 0 bis ca. 2500 Hz auf. Zwischen ca. 1,37 s und 1,44 s häufen sich die Messpunkte über alle gemessenen Frequenzen mit einer Stärke von bis zu -15 dB. Dies zeigt den Moment, in dem der Schwamm vorbeigeschoben wird. Im Anschluss vibriert das Rohr über alle Frequenzen nach und zeigt eine Häufung der Messpunkte von bis zu -35 dB.

Das gezeigte Vibrationsprofil ist beispielhaft für das Ereignis "Durchblasen eines Speednet-Rohres mit einem Schwamm". Anhand solch eines Profils kann dieses Ereignis, wie in den Fig. 1-5 beschrieben, identifiziert werden.

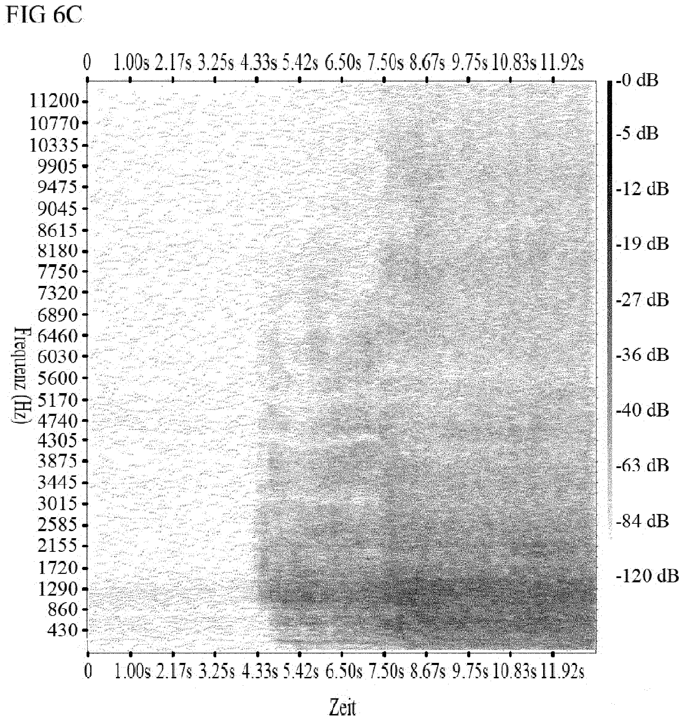

**Fig. 6C** ist eine beispielhafte Ansicht eines Frequenzprofils bzw. Vibrationsprofils, das das Durchblasen eines Speednet-Rohres mit einem Mikrokabel gemäß eines Ausführungsbeispiels darstellt.

Die Figur zeigt Vibrations-Messpunkte zu verschiedenen Frequenzen in Hz (0 bis ca. 12 kHz) über die Zeit in Sekunden (0 bis ca. 12 s). Die Häufung von Messpunkten gibt die Stärke der Vibration in dB (-120 bis 0 dB) an.

Über die gesamte Darstellung ist ein Grundrauschen von bis zu etwa -90 dB zu erkennen ist. Die Messpunkte häufen sich mit einer Stärke von ca. -40 dB bei etwa den Frequenzen 400 Hz und 1300 Hz im Zeitbereich von 0 s bis etwa 1 s. Dies zeigt, ähnlich zu FIG 6A, die Luft, die vor dem Kabel hergeschoben wird. Ab 1 s verstärkt sich die Häufung von Messpunkten im Bereich von 400 Hz bis 1300 Hz auf eine Stärke von ca. -12 dB. Ferner ist ab ca. 1 s eine Häufung von Messpunkte in den Frequenzen von 1300 Hz bis 12kHz von bis zu -27 dB zu erkennen, dabei wird die Vibration immer Stärker, je weiter die Zeit fortschreitet und breitet sich über immer höhere Frequenzen aus. Im Bereich von 0 bis 400 Hz ist ein ähnliches Verhalten zu beobachten. Die Messpunkte häufen sich ab ca. 1 s mit einer Stärke von bis zu -12 dB, wobei die Vibration mit fortschreitender Zeit immer Stärker wird und sich zu den tieferen Frequenzen hin ausbreitet.

Das gezeigte Vibrationsprofil ist beispielhaft für das Ereignis "Durchblasen eines Speednet-Rohres mit einem Mikrokabel". Anhand solch eines Profils kann dieses Ereignis, wie in den Fig. 1-5 beschrieben, identifiziert werden.

Die Erfindung wurde anhand bevorzugter Ausführungen beschrieben, wobei die einzelnen Merkmale der beschriebenen Ausführungen frei miteinander kombiniert werden können und/oder ausgetauscht werden können, sofern sie kompatibel sind. Ebenso können einzelne Merkmale der beschriebenen Ausführungen weggelassen werden, sofern sie nicht zwingend notwendig sind. Für den Fachmann sind zahlreiche Abwandlungen und Ausgestaltungen möglich und offensichtlich, ohne dass dadurch der Erfindungsgedanke verlassen wird.

## Patentansprüche

1. Eine Sensorbox (100), die Folgendes aufweist:
einen Sensor (110), der mit einem Rohr (140) gekoppelt ist, wobei in dem Rohr Kabel einblasbar sind, wobei der Sensor konfiguriert ist,
Vibrationsdaten am Rohr zu detektieren, wobei die detektierten Vibrationsdaten über die Zeit ein Vibrationsprofil darstellen;
eine Sendeeinheit (120), die die detektierten Vibrationsdaten überträgt und/oder Ereignisdaten überträgt, die eines oder mehrere Ereignisse im Vibrationsprofil kennzeichnen, wobei die Sensorbox dazu einen Prozessor (130) gekoppelt mit der Sendeeinheit aufweist, der basierend auf dem Vibrationsprofil das eine oder die mehreren Ereignisse identifiziert.

2. Sensorbox nach einem der vorhergehenden Ansprüche, wobei der Sensor ein Piezo-Sensor, ein akustischer Sensor oder ein Photo-Sensor ist.

3. Sensorbox nach einem der vorhergehenden Ansprüche, wobei die Sendeeinheit die detektierten Vibrationsdaten oder die Ereignisdaten mittels einer Funktechnologie, vorzugsweise einer Mobilfunktechnologie oder LoRaWAN-Technologie überträgt.

4. Sensorbox nach einem der vorhergehenden Ansprüche, wobei die Sendeeinheit und der Prozessor ansprechend auf ein Aktivierungssignal aus einem Energiesparmodus aufgeweckt werden.

5. Sensorbox nach einem der vorhergehenden Ansprüche, wobei der Sensorbox eine einzigartige vorbestimmte Kennung zugeordnet ist, wobei die Sendeeinheit zum Senden der Kennung an eine externe Empfangseinheit (310) konfiguriert ist.

6. Ein Einblas-Sensor-System, das Folgendes aufweist:
wenigstens eine Sensorbox (100) nach einem der vorhergehenden Ansprüche;
eine Empfangseinheit (310), die die detektierten Vibrationsdaten empfängt, falls die Sendeinheit der Sensorbox Vibrationsdaten überträgt oder die Ereignisdaten empfängt, die ein oder mehrere Ereignisse kennzeichnen, falls die Sendeinheit der Sensorbox die Ereignisdaten überträgt;
einen Systemprozessor (320), der in dem Vibrationsprofil eines oder mehrere Ereignisse identifiziert und Ereignisdaten generiert, falls die Empfangseinheit die detektierten Vibrationsdaten empfängt.

7. Einblas-Sensor-System nach Anspruch 6, das eine Vielzahl (100a, 100b, 100c, 100d) von Sensorboxen nach einem der Ansprüche 1-5 aufweist.

8. Einblas-Sensor-System nach Anspruch 7, wobei die Empfangseinheit die detektierten Vibrationsdaten oder die Ereignisdaten von der Vielzahl von Einblas-Sensorboxen empfängt und die detektierten Vibrationsdaten oder die Ereignisdaten für jede der Vielzahl von Einblas-Sensorboxen mit einer jeweiligen einzigartigen Kennung in ein digitales Netzwerk (330) überträgt, wobei das Netzwerk die Vibrationsdaten oder die Ereignisdaten mit der jeweiligen Kennung geographischen Adressen zuordnet.

9. Einblas-Sensor-System nach einem der Ansprüche 6-8 oder Sensorbox nach einem der Ansprüche 1-5, wobei das eine oder die mehreren Ereignisse Ankommen von Luft am Ende des Rohres bzw. Luftdruckveränderung im Rohr, einem Schwamm oder einem Kabel im Rohr im Messbereich des Sensors umfassen.

10. Ein Verfahren (500) zum Detektieren von Vibrationsdaten an einem Rohr in dem Kabel einblasbar sind, wobei das Verfahren Folgendes aufweist:
Detektieren (510), mit einem Sensor, der mit dem Rohr gekoppelt ist, von Vibrationsdaten, wobei die detektierten Vibrationsdaten über die Zeit ein Vibrationsprofil darstellen;
Übertragen (520), mit einer Sendeeinheit, der detektierten Vibrationsdaten und/oder von Ereignisdaten, die eines oder mehrere Ereignisse im Vibrationsprofil kennzeichnen, wobei dazu ein Prozessor gekoppelt mit der Sendeeinheit basierend auf dem Vibrationsprofil das eine oder die mehreren Ereignisse identifiziert.
